# EUROPÄISCHE PATENTSCHRIFT

(11) **EP 2 848 359 B1**
(45) Veröffentlichungstag und Bekanntmachung des Hinweises auf die Patenterteilung: **09.11.2016**
(21) Anmeldenummer: 13184360.9
(22) Anmeldetag: 13.09.2013
(51) Int. Cl.: B23Q 1/76

(54) **Lünette**
Stationary support
Lunette

(43) Veröffentlichungstag der Anmeldung: 18.03.2015
(73) Patentinhaber: SMW-AUTOBLOK Spannsysteme GmbH, 88074 Meckenbeuren (DE)
(72) Erfinder: Scheming, Robert, 88074 Meckenbeuren (DE)
(74) Vertreter: Engelhardt & Engelhardt

(56) Entgegenhaltungen:
- EP-A1- 2 505 302
- EP-A1- 2 505 303
- DE-A1- 19 950 706
- US-A- 5 058 468

## Beschreibung

Die Erfindung bezieht sich auf eine Lünette zur Zentrierung eines rotationssymmetrischen Werkstückes im Raum, nach dem Oberbegriff des Patentanspruches 1, (siehe z.B. DE-19950706).

Aus der EP 2505303 A1 ist eine Lünette zu entnehmen, die zwei kreuzweise angeordnete äußere Lünettenarme aufweist, die mit ihrem im Inneren der Gehäuseschalen freien Ende jeweils in einer Führungsnut verschiebbar gehalten sind. Die Führungsnut ist dabei jeweils in einem separaten Bauteil eingearbeitet, die relativ beweglich zu den Gehäuseschalen gelagert sind, um zu erreichen, dass die zwei äußeren Lünettenarme in vertikaler Richtung während des Spannzustandes geringfügig bewegbar sind bzw. den Kontaktzeitpunkt der Lünettenarme einstellen zu können, bei dem diese mit dem Werkstück in Berührung treten.

Solche zentrierbaren Lünetten kommen zum Einsatz, wenn Hochpräzisionswerkstücke zu fertigen sind, denn sobald Späne von dem Werkstück während der Bearbeitung abgetrennt sind, verändert sich dessen Eigengewicht, wodurch wiederum eine nachgeschaltete Zentrierung erforderlich ist, um entsprechende Bearbeitungsfehler auszugleichen.

Diese Lünetten haben sich für den erläuterten Einsatzzweck bewährt. Wenn jedoch Lünetten zur Verfügung zu stellen sind, um Werkstücke einzuspannen, an denen solche technischen Anforderungen nicht gestellt sind, da die abzustützenden Werkstücke gewisse fertigungsbedingte Bearbeitungsabweichungen aufweisen können, beispielsweise für die Massenproduktion von entsprechenden rotationssymmetrischen Werkstücken, dann ist es erforderlich, den Be- und Entladevorgang möglichst schnell zu bewerkstelligen. Da jedoch die Lünettenarme aus der von den Gehäuseschalen gebildeten Ebene in den Arbeitsbereich der Werkzeugmaschine überstehen, ist ein Abstand beim Be- und Entladen des Werkstückes zu den Lünettenarmen einzuhalten, um die Werkstücke an den Lünettenarmen vorbeizuführen. Insbesondere die beiden äußeren Lünettenarme behindern folglich den Be- und Entladevorgang.

Es ist daher Aufgabe der Erfindung, eine Lünette der eingangs genannten Gattung derart auszugestalten, dass die Lünettenarme vollständig in das von den Gehäuseschalen gebildete Gehäuse einfahrbar sind, um die Be- und Entladezone der Lünette freizugeben und dass gleichzeitig sowohl der Hubweg als auch die Bauraumgröße der Lünette unverändert beibehalten werden kann.

Diese Aufgaben sind erfindungsgemäß durch die Merkmale des kennzeichnenden Teils von Patentanspruch 1 gelöst.

Weitere vorteilhafte Weiterbildungen der Erfindungen ergeben sich aus den Unteransprüchen.

Dadurch, dass unmittelbar in die beiden Gehäuseschalen eine Führungsnut eingearbeitet ist, die aus zwei Teilabschnitten besteht, deren Abstand zu der Längsachse der Lünette unterschiedlich groß bemessen ist, können die Lünettenarme vollständig in die Gehäuseschalen eingefahren werden, um aus dem Arbeitsbereich bzw. der Be- und Entladezone der Werkzeugmaschine zu gelangen. Die beiden miteinander verbundenen Teilabschnitte der Führungsnut sind dabei in den Gehäuseschalen derart ausgerichtet, dass der erste Teilabschnitt näher zu der Längsachse der Gehäuseschalen verläuft als der zweite Teilabschnitt der Führungsnut. Die beiden Teilabschnitte der Führungsnut sind miteinander verbunden und der erste Teilabschnitt der Führungsnut liegt weiter beabstandet zu dem Be- und Entladebereich, in das das Werkstück gelangt.

Zudem sind die beiden Teilabschnitte der Führungsnut bogenförmig oder winklig zueinander ausgerichtet, so dass die beiden äußeren Lünettenarme beim Einfahren in die Gehäuseschalen einen entsprechenden Bewegungskurvenverlauf einnehmen und dann vollständig in die Gehäuseschalen eintauchen.

Durch diese konstruktiven Maßnahmen ist vorteilhafterweise erreicht, dass der Bauraum der Lünette unverändert beibehalten werden kann, ohne dass die Lünette zu vergrößern ist, und dass auch der Hubweg, den die drei Lünettenarme zurücklegen können, identisch mit dem Hubweg und der Bauraumgröße von Lünetten ist, die die entsprechenden konstruktiven Ausgestaltungen der Führungsnut nicht aufweisen. Da bei der Fertigung der Gehäuseschalen und insbesondere der notwendigen Führungsnuten und Steuerkurven Herstellungsfehlertoleranzen auftreten, ist es äußerst zweckmäßig, wenn die im Inneren der Gehäuseschalen angeordneten freien Ende der beiden äußeren Lünettenarme mit einem Kulissenstein versehen sind, der in der Führungsnut verläuft und durch den die freien Ende der äußeren Lünettenarme in der jeweiligen Führungsnut verschiebbar gelagert sind. Sobald jedoch die Zustellbewegung der Lünettenarme beendet ist, also der erste und zweite Teilabschnitt der Führungsnut von dem Kulissenstein der äußeren Lünettenarme durchlaufen ist, ist eine Spannbewegung der äußeren Lünettenarme auf das einzuspannende Werkstück notwendig. Diese Spannbewegung ist durch die von dem zweiten Teilabschnitt abgewinkelten Steuerkurve erreicht, die in den zweiten Teilabschnitt der Führungsnut einmündet. Um die vorhandenen Herstellungsfehler auszugleichen, ist an dem Kulissenstein ein Anschlagsbolzen schwimmend gelagert.

Die schwimmende Lagerung des Anschlagsbolzens an dem Kulissenstein ist dadurch erreicht, dass in den Kulissenstein eine Öffnung eingearbeitet ist und dass der Anschlagsbolzen eine plan ausgestaltete Anlagefläche aufweist. Ein vorgegebener Winkelbereich der Innenwand der Öffnung weist eine plane Kontur auf, die geringfügig größer bemessen ist als die Breite der Anlagefläche des Anschlagsbolzens. Folglich ist der Anschlagsbolzen in der Öffnung um seine eigene Längsachse geringfügig verdrehbar. Sollten daher gewisse Herstellungsfehler auftreten, können diese durch die Verdrehbarkeit des Anschlagsbolzens ausgeglichen werden, denn dieser legt sich mit seiner Anlagefläche an die dieser zugewandten Flanke der Steuerkurve an und gleitet während der Spannbewegung der Lünettenarme an dieser entlang. Durch die konstruktive Ausgestaltung des Anschlagsbolzens ist zudem erreicht, dass erhebliche Spannkräfte zwischen den Lünettenarmen, dem Anschlagsbolzen und den Gehäuseschalen übertragen werden können, denn die Anlagefläche des Anschlagsbolzen kann entsprechend hoch dimensionierte Druckkräfte aufnehmen und weiterleiten.

Es ist jedoch auch denkbar, dass an dem Kulissenstein eine verdrehbare Rolle angebracht ist, die entlang der Flanke der Steuerkurve verfahrbar ist, um die Spannbewegungen der äußeren Lünettenarme zu erreichen.

In der Zeichnung ist ein erfindungsgemäßes Ausführungsbeispiel einer Lünette dargestellt, das nachfolgend näher erläutert ist. Im Einzelnen zeigt:
- Figur 1a: eine Lünette mit zwei äußeren kreuzweise angeordneten Lünettenarmen und einem entlang der Längsachse der Lünette verschiebbar zwischen zwei Gehäuseschalen angeordneten mittleren Lünettenarm, der über einen Knotenpunkt der beiden äußeren Lünettenarme mit diesen in trieblicher Wirkverbindung steht, in Seitenansicht und im eingefahrenen Zustand der Lünettenarme,
- Figur 1b: die Lünette gemäß Figur 1 a , im ausgefahrenen Zustand der Lünettenarme, unmittelbar bevor diese in Wirkkontakt mit einem einzuspannenden Werkstück treten,
- Figur 1c: die Lünette gemäß Figur 1 a, im Spannzustand,
- Figur 2: die Lünette gemäß Figur 1 a, entlang der Schnittlinie II-II,
- Figur 3a: eine Explosionsdarstellung der Lünette gemäß Figur 1 a,
- Figur 3b: ein vergrößerter Ausschnitt der Lünette, gemäß Figur 1c, im Bereich IIIb, mit einem Kulissenstein, der an den äußeren Lünettenarmen befestigt ist und in den ein Anschlagsbolzen mit einer planen Anlagefläche eingesetzt ist,
- Figur 3c: die Lünette gemäß Figur 3b mit einer an dem Kulissenstein angebrachten Rolle zur Abstützung der Spannbewegung der äußeren Lünettenarme,
- Figur 4: die Lünette gemäß Figur 1c, entlang der Schnittlinie IV-IV und

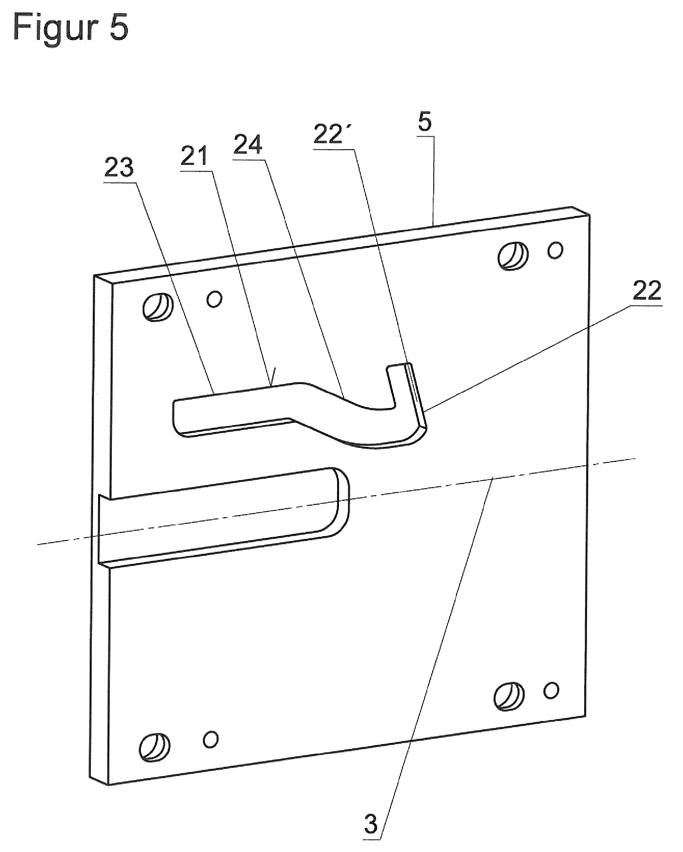

- Figur 5: eine der Gehäuseschalen der Lünette gemäß Figur 1a.

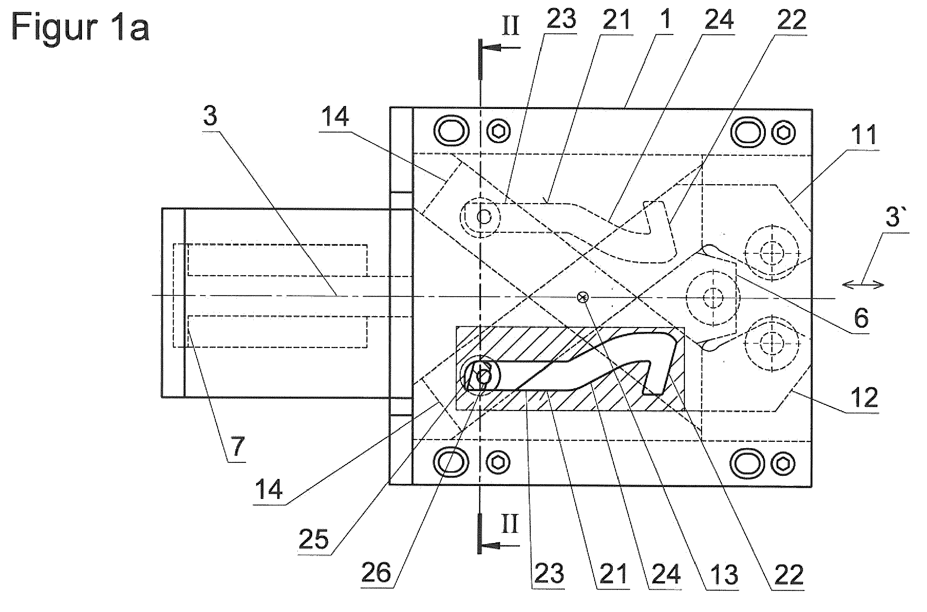

In Figur 1a ist eine Lünette 1 zu entnehmen, deren drei Lünettenarme 6, 11 und 12 vollständig in einem von zwei Gehäuseschalen 4 und 5 gebildeten Gehäuse eingefahren sind, um die Be- und Entladezone der Lünette 1 freizugeben.

In jede der beiden Gehäuseschalen 4 und 5 ist dabei eine aus zwei Teilabschnitten 23, 24 bestehende Führungsnut 21 sowie eine in die Führungsnut 21 einmündende Steuerkurve 22 eingearbeitet. Die Führungsnuten 21 und die Steuerkurven 22 der beiden Gehäuseschalen 4 und 5 sind dabei spiegelbildlich zueinander ausgerichtet.

Die drei Lünettenarme 6, 11 und 12 sind trieblich mit einem zwischen den beiden Gehäuseschalen 4 und 5 verschiebbar gelagerten Betätigungskolben 7 verbunden, der fluchtend zu der Längsachse 3 der Lünette 1 verläuft und durch den die Bewegungsrichtung 3' vorgegeben ist. Die zwei äußeren Lünettenarme 11 und 12 sind durch Führungsbahnen mit dem mittleren Lünettenarm 6 verbunden, der unmittelbar von dem Betätigungskolben 7 axial hin- und her verfahrbar ist. Wenn der Betätigungskolben 7 in Richtung eines einzuspannenden Werkstückes 2, also in Bewegungsrichtung 3', verschoben ist, dann wird die Betätigungskraft des Betätigungskolbens 7 über den mittleren Lünettenarm 6 an die beiden äußeren Lünettenarme 11 und 12 übertragen, die folglich mit diesen in trieblicher Wirkverbindung stehen. Die beiden äußeren Lünettenarme 11 und 12 verlaufen kreuzweise oder scherenartig zueinander und sind an den freien Enden 14 über Kulissenstein 25 bzw. Anschlagsbolzen 26 in der Führungsnut 21 geführt, so dass bei der Zustellbewegung des mittleren Lünettenarmes 6 die beiden äußeren Lünettenarme 11 und 12 synchron verstellt sind.

Die freien im Inneren der Gehäuseschalen 4 und 5 angeordneten Enden der beiden äußeren Lünettenarme 11 und 12 sind über einen Kulissenstein 25 in der jeweiligen Führungsnut 21 eingesetzt, so dass die freien Enden der äußeren Lünettenarme 11 und 12 zunächst den Verlauf der Führungsnut 21 vollziehen und sobald das Ende der Führungsnut 21, also das Ende des zweiten Teilabschnittes 24, erreicht ist, in die Steuerkurve 22, wie dies nachfolgend noch näher erläutert ist, eintauchen. Dabei entspricht der erste und zweite Teilabschnitt 23 und 24 der Führungsnut 21 der Zustellbewegung der äußeren Lünettenarme 11 und 12 und die Steuerkurve 22 dem Spannweg der äußeren Lünettenarme 11 und 12.

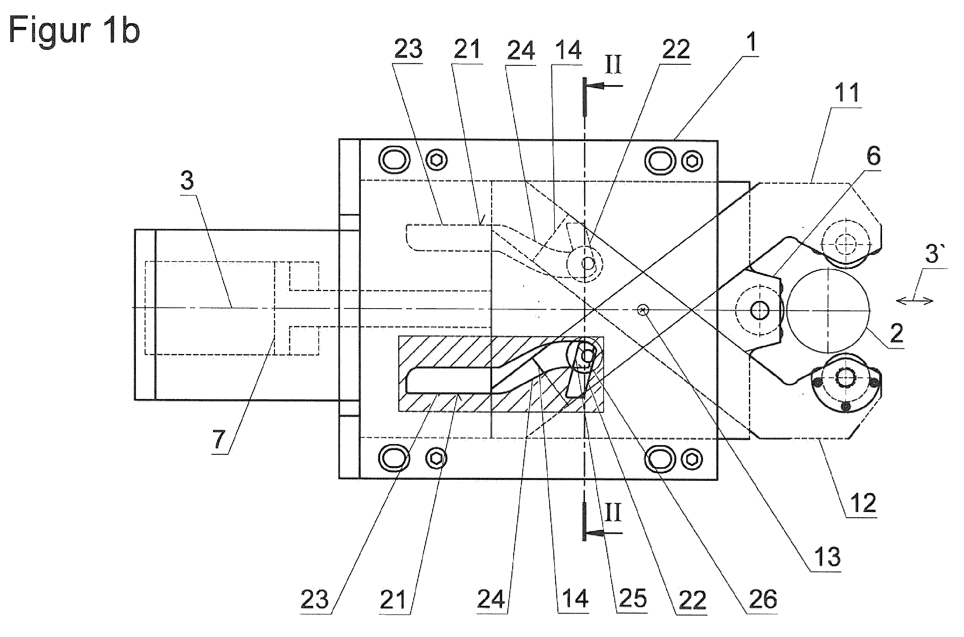

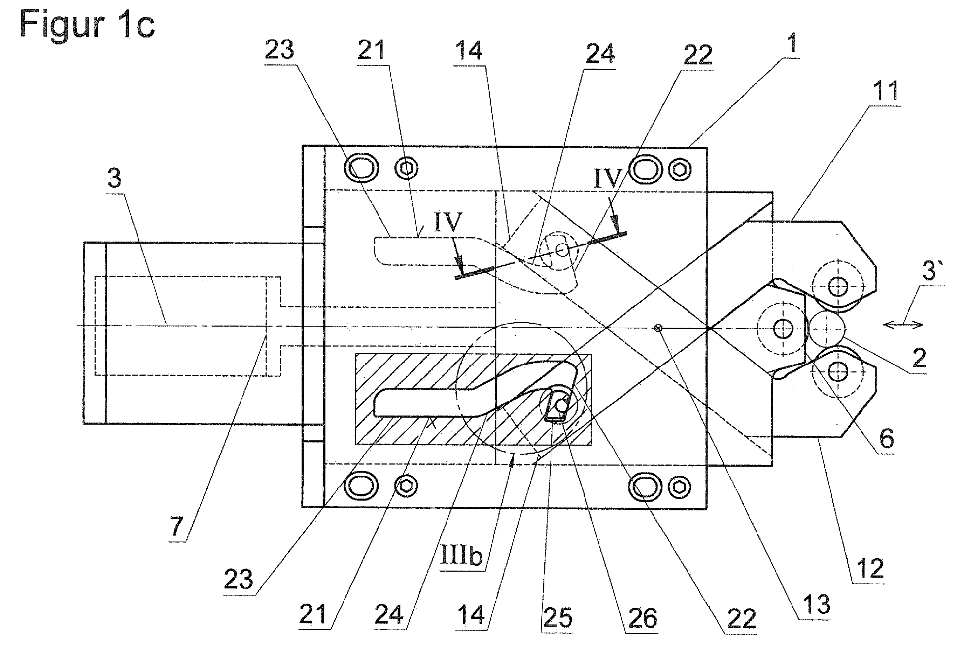

Insbesondere den Figuren 1 a, 1 b, 1 c sowie 3a und 5 ist zu entnehmen, dass die beiden Teilabschnitte 23, 24 der Führungsnut 21 einen unterschiedlich groß bemessenen Abstand zu der Längsachse 3 der Lünette 1 aufweisen. Der erste Teilabschnitt 23 verläuft parallel zu der Längsachse 3 und ist von dieser weiter entfernt beabstandet als der zweite Teilabschnitt 24. Zudem ist der zweite Teilabschnitt 24 in Richtung der Längsachse 3 geneigt, so dass sich zwischen dem ersten Teilabschnitt 23 und dem zweiten Teilabschnitt 24 der Führungsnut 21 eine Krümmung, eine Biegung oder eine abgewinkelte Struktur ergibt. Der zweite Teilabschnitt 24 geht in die Steuerkurve 22 über, die in Richtung des zweiten Teilabschnittes 24 der Führungsnut 21 abgewinkelt ist und im Wesentlichen in Richtung der Außenseite der jeweiligen Gehäuseschale 4 bzw. 5 weist. Die beiden Teilabschnitte 23 und 24 der Führungsnut 21 und die daran angeschlossene Steuerkurve 24 bilden im Querschnitt im Wesentlichen die Form eines stilisierten L mit Krümmung oder Winkel nach.

In Figur 1 b ist gezeigt, dass die beiden äußeren Lünettenarme 11 und 12, nachdem deren freien in den Gehäuseschalen 4 und 5 angeordneten Enden in den zweiten Teilabschnitt 24 der Führungsnut 21 eingefahren sind, in Richtung des einzuspannenden Werkstückes 2 bogenförmig zugestellt sind. Zwischen den in der Be- und Entladezone des Werkstückes 2 angeordneten Lünettenarme 6, 11 und 12 besteht demnach noch keine Wirkverbindung, so dass die drei Lünettenarme 6, 11 und 12 von der Mantelfläche des einzuspannenden Werkstückes 2 beabstandet sind. Gleichwohl sind die drei Lünettenarme 6, 11 und 12 aus den Gehäuseschalen 4 und 5 herausgefahren.

In Figur 1c ist der Spannzustand der Lünette 1 zu entnehmen. Die beiden äußeren Lünettenarme 11 und 12 sind mit den im Inneren der Gehäuseschalen 4 und 5 angeordneten freien Enden in die Steuerkurve 22 eingefahren und jeweils nach außen bewegt, so dass die im Bereich des Werkstückes 2 angeordneten freien Enden der Lünettenarme 11 und 12 radial oder nahezu radial auf das Werkstück 2 zufahren und dieses gemeinsam mit dem mittleren Lünettenarm 6 im Raum halten.

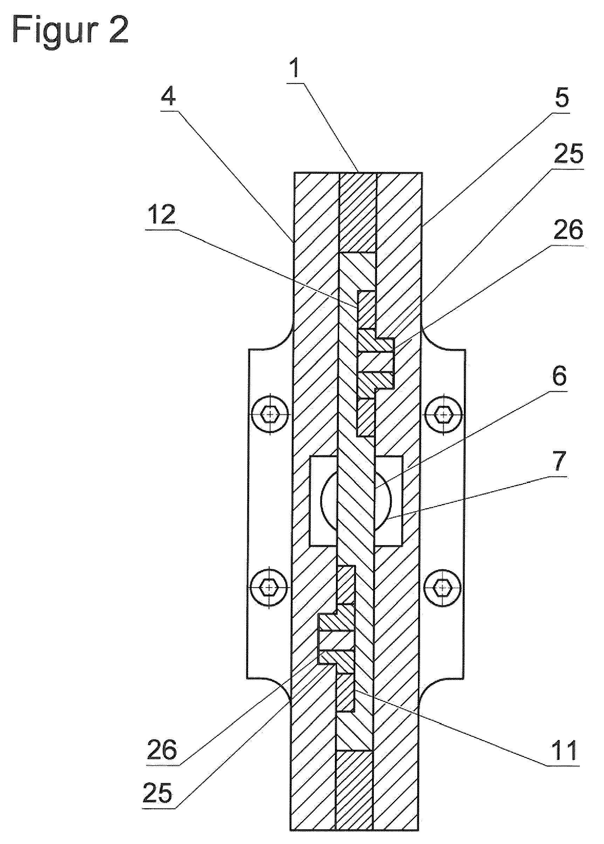

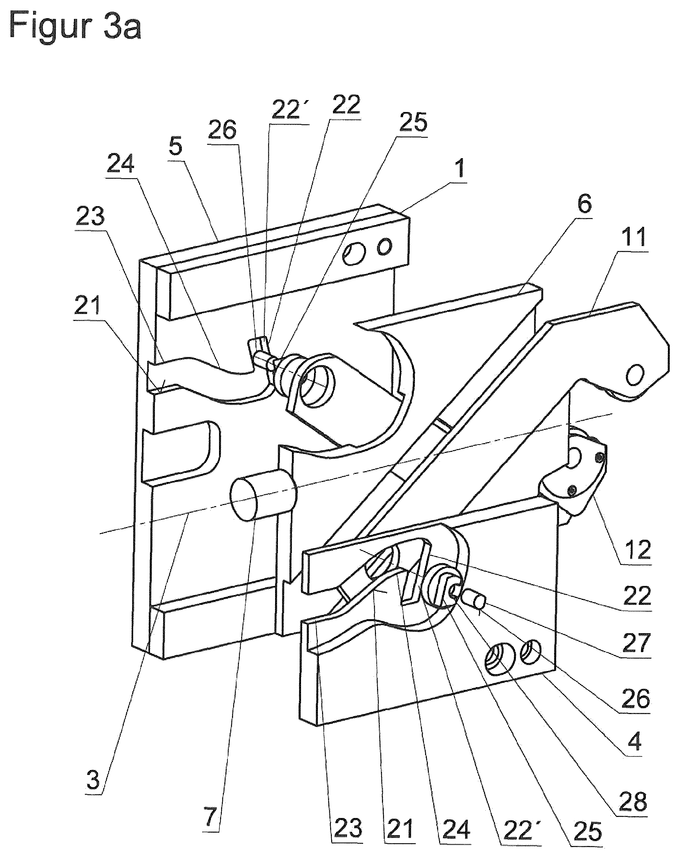

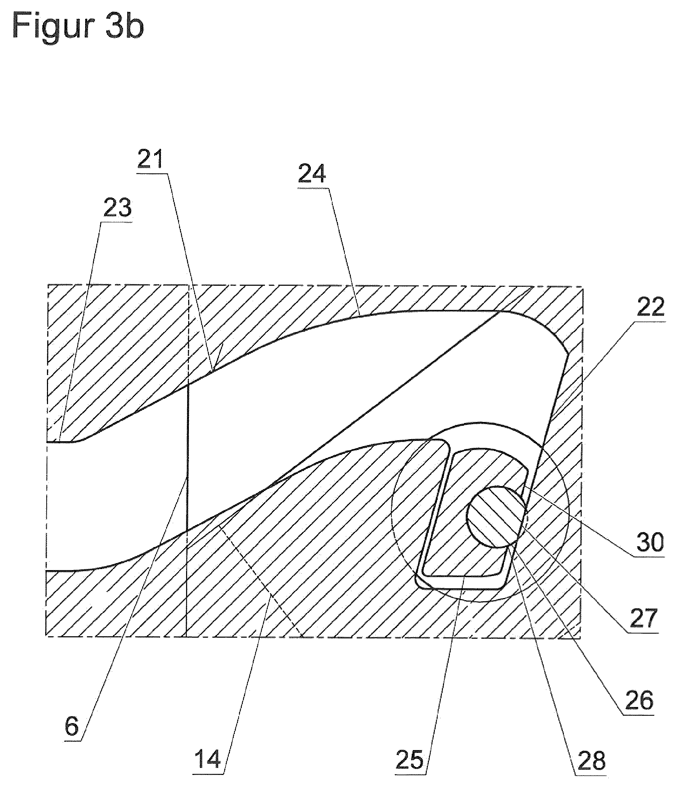

Insbesondere aus den Figuren 2, 3a und 3b ist die konstruktive Ausgestaltung des Kulissensteins 25 ersichtlich. Der Kulissenstein 25, der an den jeweiligen freien Enden der äußeren Lünettenarme 11 und 12 fest angebracht ist, gleitet in den ersten und zweiten Teilabschnitt 23, 24 der Führungsnut 21 entlang. In dem Kulissenstein 25 ist ferner eine Öffnung 28 eingearbeitet, in die ein Anschlagsbolzen 26 schwimmend gelagert eingesetzt ist.

Die schwimmende Lagerung des Anschlagsbolzens 26 ist dadurch erreicht, dass die im Wesentlichen runde Innenwand der Öffnung 28, der der Steuerkurve 22 zugewandt ist, eine plane Anlagefläche 30 angearbeitet ist. Der Anschlagsbolzen 26 weist eine in dessen Längsrichtung sich erstreckende plane Anlagefläche 27 auf. Die Breite der planen Anlagefläche 30 weist eine Breite auf, die größer bemessen ist, als die Breite der Anlagefläche 27 des Anschlagsbolzens 26, so dass der Anschlagsbolzen 26 geringfügig um seine Längsachse verdrehbar in der Öffnung 28 gehalten ist. Diese schwimmende Lagerung dient als Ausgleich für herstellungsbedingte Ungenauigkeiten.

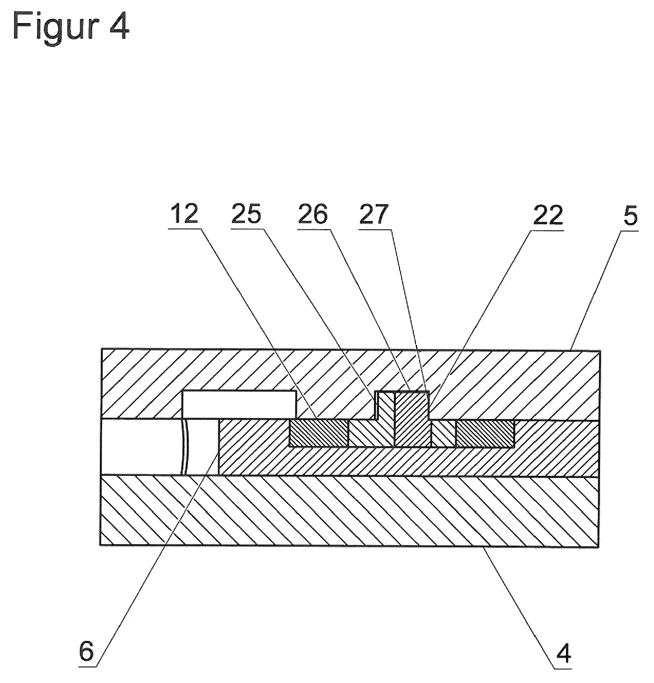

Sobald gemäß Figur 1 c oder 3b der Kulissenstein 25 den zweiten Teilabschnitt 24 der Führungsnut 21 verlässt, schlägt die plane Anlagefläche 27 des Anschlagsbolzens 26 an die der Führungsnut 21 zugewandten Flanke der Steuerkurve 22 an, da der Anschlagsbolzen 26 aus der von dem Kulissenstein 25 gebildeten Ebene, wie dies insbesondere in Figur 4 ersichtlich ist, übersteht. Sollten herstellungsbedingte Ungenauigkeiten zwischen den Verläufen der in die Gehäuseschalen 4 und 5 eingearbeiteten Führungsnuten 21 und Steuerkurven 22 vorliegen, können diese durch die schwimmende Lagerung des Anschlagsbolzen 26 ausgeglichen werden, so dass die plane Anlagefläche 27 vollflächig an der Flanke der Steuerkurve 22 anliegt und entlang dieser gleitet, solange bis die Spannbewegung der Lünettenarme 6, 11 und 12 beendet ist.

Aufgrund der vollflächigen Anlage des Anschlagsbolzens 26 an der Flanke der Steuerkurve 22 können erhebliche Spannkräfte zwischen dem Betätigungskolben 7, den Lünettenarmen 11 und 12 und dem Werkstück 2 übertragen werden.

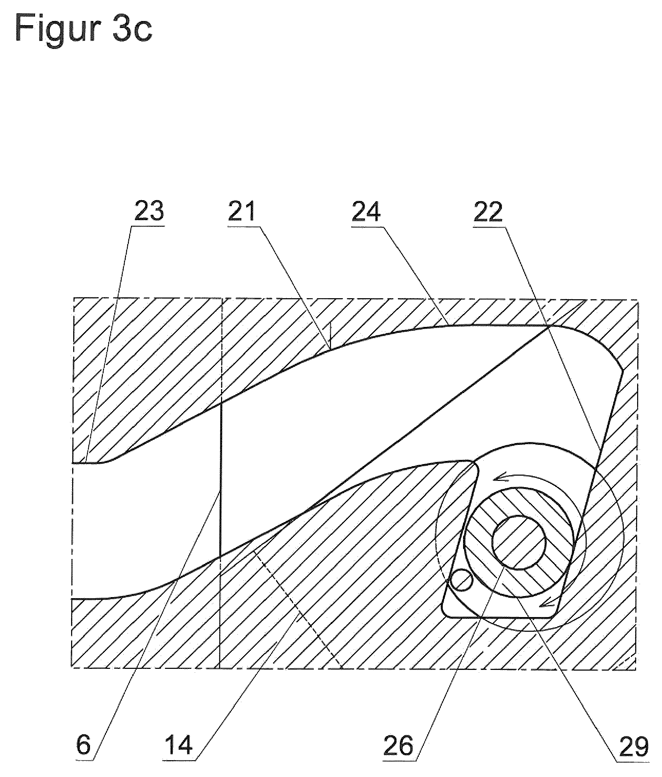

Gemäß Figur 3c kann an den Kulissenstein 25 eine Rolle 29 verdrehbar angebracht sein, die entlang der dieser zugewandten Flanke der Steuerkurve 22 abrollt, sobald die Rolle 29 auf die Flanke der Steuerkurve 22 auftrifft.

Aufgrund der bogen- oder winkelförmigen Ausgestaltung der Führungsnut 21 ist erreicht, dass die beiden äußeren Lünettenarme 11 und 12 vollständig in das von den Gehäuseschalen 4 und 5 gebildete Gehäuse einfahrbar sind, um die Be- und Entladezone der Werkzeugmaschine freizugeben. Folglich können auch groß bemessene und schwere Werkstücke 2 unkompliziert und schnell im Bereich der Lünette 2, beispielsweise mittels eines Krans oder dgl., gehalten werden, um anschließend die drei Lünettenarme 6, 11 und 12 aus den Gehäuseschalen 4 und 5 in Richtung des einzuspannenden Werkstückes 2 zuzustellen. Die Be- und Entladezeit wird dadurch erheblich reduziert, da die drei Lünettenarme 6, 11 und 12 die Be- und Entladung der Werkzeugmaschine nicht behindern.

Der Neigungswinkel zwischen dem ersten parallel zu der Längsachse 3 verlaufenden Teilabschnitt 23 und dem sich daran anschließenden zweiten Teilabschnitt 24 liegt zwischen 10° und 25°.

## Patentansprüche

1. Lünette (1) zur Zentrierung eines rotationssymmetrischen Werkstückes (2) im Raum,
bestehend aus:
- zwei zueinander beabstandet angeordneten und fest miteinander verbundenen Gehäuseschalen (4, 5),
- aus einem zwischen den beiden Gehäuseschalen (4, 5) angeordneten mittleren Lünettenarm (6), der mittels eines Betätigungskolbens (7) in axialer Bewegungsrichtung (3') auf das Werkstück (2) verschiebbar in den Gehäuseschalen (4, 5) gelagert ist,
- zwei äußeren Lünettenarmen (11, 12), die mit dem mittleren Lünettenarm (6) trieblich verbunden sind,
aus einer in jeder der Gehäuseschalen (4, 5) eingearbeiteten Führungsnut (21) und aus einer Steuerkurve (22), in die die in den Gehäuseschalen (4, 5) angeordneten freien Enden (14) der beiden äußeren Lünettenarme (11, 12) verschiebbar eingesetzt sind,
**dadurch gekennzeichnet,**
**dass** die Führungsnut (21) aus einem ersten und zweiten Teilabschnitt (23, 24) gebildet ist, und dass der Abstand des ersten Teilabschnittes (23) zu der Längsachse (3) der Gehäuseschalen (4, 5) größer bemessen ist, als der Abstand des zweiten Teilabschnittes (24) der Führungsnut (21), der in die Steuerkurve (22) übergeht, dass an dem im Inneren der Gehäuseschalen (4, 5) verlaufenden äußeren Lünettenarmen (11, 12) jeweils ein Kulissenstein (25) angebracht ist, dass an den Kulissenstein (25) ein Anschlagsbolzen (26) befestigt ist, der über eine schwimmend ausgestaltete Lagerung mit dem Kulissenstein (25) verbunden ist.

2. Lünette nach Anspruch 1,
**dadurch gekennzeichnet,**
**dass** der erste und der zweite Teilabschnitt (23, 24) im Übergangsbereich eine gekrümmte, bogenförmige oder winklige Innenkontur aufweisen.

3. Lünette nach Anspruch 1,
**dadurch gekennzeichnet,**
**dass** der Kulissenstein (25) fest mit dem jeweiligen Lünettenarm (11, 12) verbunden ist und dass der Anschlagsbolzen (26) aus der von dem Kulissenstein (25) gebildeten Ebene übersteht.

4. Lünette nach Anspruch 2 oder 3,
**dadurch gekennzeichnet,**
**dass** an dem Anschlagsbolzen (26) eine plane Anlagefläche (27) angearbeitet ist, durch die der Anschlagsbolzen (26) in einer in dem Kulissenstein (25) eingearbeiteten Öffnung (28) um die eigene Längsachse geringfügig verdrehbar gelagert ist und dass die Anlagefläche (27) des Anschlagsbolzens eine in Bewegungsrichtung (3') weisende Flanke der Steuerkurve (22) zugewandt ist.

5. Lünette nach Anspruch 4,
**dadurch gekennzeichnet,**
**dass** ein Teilbereich der Öffnung (28) eine plane Anlagefläche (30) aufweist, die senkrecht zu der Bewegungsrichtung (3') ausgerichtet und der Steuerkurve (22) zugewandt ist, dass die Anlagefläche (27) des Anschlagsbolzens (26) an der Anlagefläche (30) der Öffnung (28) anliegt und dass die Breite der Anlagefläche (30) geringfügig größer bemessen ist als die Anschlagsfläche (27) des Anschlagsbolzen (26).

6. Lünette nach Anspruch 4 oder 5,
**dadurch gekennzeichnet,**
**dass** die Anlagefläche (27) des Anschlagsbolzens (26) im Spannzustand der Lünettenarme (6, 11, 12) an der der Führungsnut (21) zugewandten Flanke der Steuerkurve (22) anliegt und entlang dieser während der Spannbewegung der Lünettenarme (6, 11, 12) geführt ist.

7. Lünette nach Anspruch 1,
**dadurch gekennzeichnet,**
**dass** an dem Kulissenstein (25) eine Rolle (29) drehbar angelenkt ist, die aus der von dem Kulissenstein (25) gebildeten Ebene übersteht.

8. Lünette nach Anspruch 7,
**dadurch gekennzeichnet,**
**dass** die Rolle (29) entlang der von der Flanke (22') der Steuerkurve (22) gebildeten Ebene während der Spannzustellung der Lünettenarme (6, 11, 12) geführt ist.

9. Lünette nach einem der vorgenannten Ansprüche,
**dadurch gekennzeichnet,**
**dass** der erste Teilabschnitt (23) der Führungsnut (21) parallel zu der Längsachse (3) der Gehäuseschalen (4, 5) ausgerichtet ist und dass der zweite Teilabschnitt (24) der Führungsnut in Richtung der Längsachse (3) der Gehäuseschalen (4, 5) geneigt ist.

10. Lünette nach Anspruch 9,
**dadurch gekennzeichnet,**
**dass** der Neigungswinkel zwischen dem ersten und dem zweiten Teilabschnitt (23, 24) der Führungsnut (21) in einem Winkelbereich von 10° bis 25° ausgebildet ist.

## Claims

1. A stationary support (1) for centring a rotationally symmetrical workpiece (2) in the space,
consisting of:
- two housing shells (4, 5) arranged at a distance from one another and firmly connected together,
- a middle stationary support arm (6) arranged between the two housing shells (4, 5) which is mounted in an axial movement direction (3') in the housing shells (4, 5) by means of an actuation piston (7) so as to be movable on the workpiece (2),
- two outer stationary support arms (11, 12) that are in a driving connection with the middle stationary support arm (6), of a guide groove (21) worked into each of the housing shells (4, 5) and of a control cam (22) into which the free ends (14) of both outer stationary support arms (11, 12) arranged in the housing shells (4, 5) are inserted in a movable arrangement,
**characterised in that,**
the guide groove (21) is formed from a first and second partial section (23, 24) and that the distance between the first partial section (23) and the longitudinal axis (3) of the housing shells (4, 5) is larger than the distance from the second partial section (24) of the guide groove (21) that transitions into the control cam (22), that one sliding block (25) each is attached on the outer stationary support arms (11, 12) running inside the housing shells (4, 5), that a stop pin (26) is attached to the sliding block (25) and the stop pin (26) is connected to the sliding block (25) by means of a floating mounting.

2. The stationary support in accordance with Claim 1,
**characterised in that,**
the first and second partial sections (23, 24) have a curved, arched or angled inner contour in the transition area.

3. The stationary support in accordance with Claim 1,
**characterised in that,**
the sliding block (25) is firmly connected to the corresponding stationary support arm (11, 12) and that the stop pin (26) projects from the plane formed by the sliding block (25).

4. The stationary support in accordance with Claim 2 or 3,
**characterised in that,**
a flat contact surface (27) is worked onto the stop pin (26) by means of which the stop pin (26) is mounted in an opening (26) worked into the sliding block (25) in such a way that it can rotate slightly about its own longitudinal axis, and that the contact surface (27) of the stop pin faces a flank of the control cam (22) which faces in the direction of movement (3').

5. The stationary support in accordance with Claim 4,
**characterised in that,**
a partial area of the opening (28) has a flat contact surface (30) which is aligned at right angles to the movement direction (3') and faces towards the control cam (22), that the contact surface (27) of the stop pin (26) makes contact with the contact surface (30) of the opening (28), and that the width of the contact surface (30) is slightly larger than the contact surface (27) of the stop pin (26).

6. The stationary support in accordance with Claim 4 or 5,
**characterised in that,**
the contact surface (27) of the stop pin (26) makes contact with the flank of the control cam (22) facing the guide groove (21) in the clamped condition of the stationary support arms (6, 11, 12) and is guided along this flank during the clamping movement of the stationary support arms (6, 11, 12).

7. The stationary support in accordance with Claim 1,
**characterised in that,**
a roller (29) is articulated on the sliding block (25) in a rotating arrangement and the roller (29) projects from the plane formed by the sliding block (25).

8. The stationary support in accordance with Claim 7,
**characterised in that,**
the roller (29) is guided along the plane formed by the flank (22') of the control cam (22) during the clamping advance movement of the stationary support arms (6, 11, 12).

9. The stationary support in accordance with one of the aforementioned claims,
**characterised in that,**
the first partial section (23) of the guide groove (21) is aligned parallel with the longitudinal axis (3) of the housing shells (4, 5) and that the second partial section (24) of the guide groove is angled in the direction of the longitudinal axis (3) of the housing shells (4, 5).

10. The stationary support in accordance with Claim 9,
**characterised in that,**
the angle between the first and the second partial sections (23, 24) of the guide groove (21) is configured in the angle range from 10° to 25°.

## Revendications

1. Lunette (1) pour le centrage d'une pièce à usiner à symétrie de rotation (2) dans l'espace,
comprenant :
- deux demi-boîtiers (4, 5) espacés entre eux et rigidement liés ensemble,
- un bras de lunette central (6) disposé entre les demi-boîtiers (4, 5) qui, à l'aide d'un piston d'actionnement (7), se laisse déplacer dans les demi-boîtiers (4, 5) en direction axiale (3') vers la pièce à usiner (2),
- deux bras de lunette extérieurs (11, 12) liés par entraînement au bras de lunette central (6),
- une rainure de guidage (21) pratiquée dans chacun des demi-boîtiers (4, 5) et une came de commande (22) dans laquelle il est inséré de manière déplaçable les extrémités libres (14) de deux bras de lunette extérieurs (11, 12) disposées dans les demi-boîtiers (4, 5),
**caractérisée en ce que**,
la rainure de guidage (21) est formée par une première et une deuxième section partielle (23, 24) et que la distance de la première section partielle (23) de l'axe longitudinal (3) des demi-boîtiers (4, 5) est plus grande que la distance de la deuxième section partielle (24) de la rainure de guidage (21) passant dans la came de commande (22), que sur les bras de lunette extérieurs (11, 12) se trouvant à l'intérieur des demi-boîtiers (4, 5), il est prévu respectivement un coulisseau (25), et que sur le coulisseau (25), il est fixé un boulon de butée (26) qui est lié au coulisseau (25) par un logement flottant.

2. Lunette d'après la revendication 1,
**caractérisée en ce que**,
à l'endroit de transition, la première et la deuxième section partielle (23, 24) possèdent un contour intérieur courbé, en arc ou angulaire.

3. Lunette d'après la revendication 1,
**caractérisée en ce que**
le coulisseau (25) est lié rigidement au bras de lunette respectif (11, 12) et que le boulon de butée (26) saille du plan formé par le coulisseau (25).

4. Lunette d'après une des revendications 2 ou 3,
**caractérisée en ce que**
sur le boulon de butée (26), il est pratiqué une face de butée plane (27) qui permet au boulon de butée (26) de tourner légèrement autour de son axe longitudinal dans une ouverture (28) réalisée dans le coulisseau (26) et que la face de butée (27) du boulon de butée donne sur le flanc de la came de commande (22) donnant en direction du mouvement (3').

5. Lunette d'après la revendications 4,
**caractérisée en ce que**
une section partielle de l'ouverture (28) comporte une face de butée plane (30) orientée perpendiculairement au sens de mouvement (3') et donnant sur la came de commande (22), que la face de butée (27) du boulon de butée (26) porte sur la face de butée (30) de l'ouverture (28) et que la largeur de la face de butée (30) est un peu plus grande que la face de butée (27) du boulon de butée (26).

6. Lunette d'après une des revendications 4 ou 5,
**caractérisée en ce que**
les bras de lunette (6, 11, 12) une fois serrés, la face de butée (27) du boulon de butée (26) porte sur le flanc de la came de commande (22) qui donne sur la rainure de guidage (21) et qu'elle est guidée le long de celle-ci au mouvement de serrage des bras de lunette (6, 11, 12).

7. Lunette d'après la revendications 1,
**caractérisée en ce que**
sur le coulisseau (25), il est articulé un galet (29) saillant hors du plan formé par le coulisseau (25).

8. Lunette d'après la revendications 7,
**caractérisée en ce que**,
à l'avance de serrage des bras de lunette (6, 11, 12), le galet (29) est guidé le long du plan formé par le flanc (22') de la came de commande (22).

9. Lunette d'après une des revendications précédentes,
**caractérisée en ce que**
la première section partielle (23) de la rainure de guidage (21) est orientée parallèlement à l'axe longitudinal (3) des demi-boîtiers (4, 5) et que la deuxième section partielle (24) de la rainure de guidage est inclinée en direction de l'axe longitudinal (3) des demi-boîtiers (4, 5).

10. Lunette d'après la revendications 9,
**caractérisée en ce que**
l'angle d'inclinaison entre la première et la deuxième section partielle (23, 24) de la rainure de guidage (21) se trouve dans la plage allant de 10° à 25°.
